# EUROPEAN PATENT SPECIFICATION

(11) **EP 1 633 227 B1**
(45) Date of publication and mention of the grant of the patent: **24.06.2009**
(21) Application number: 03741665.8
(22) Date of filing: 31.07.2003
(51) Int. Cl.: A47J 37/12, A47J 37/04

(54) **FOOD HEATING APPARATUS**
FETTBACKGERÄT
APPAREIL A CHAUFFER DES ALIMENTS

(30) Priority: 18.06.2003 WO PCT/NL03/00446
(43) Date of publication of application: 15.03.2006
(73) Proprietor: Qualifryer B.V., 3811 LP Amersfoort (NL)
(72) Inventor: MORRIS, Jonathan, Emrys, NL-3818 PG Amersfoort (NL)
(74) Representative: Winckels, Johannes Hubertus F.
(86) International application number: PCT/NL2003/000553
(87) International publication number: WO 2004/110232

(56) References cited:
- WO-A-97/03596
- DE-A- 3 708 619
- US-A- 3 643 588

## Description

The invention relates to a food heating apparatus, in particular a frying apparatus or a cooking apparatus.

From WO9703596 and US patent No. 6,062,132 a cooking apparatus is known (cooking including frying), which uses a wheel and a number of baskets with food suspended from the wheel. A lower part of the wheel is immersed in a frying oil bath and the wheel is rotated around its axis so that the baskets carry the food into the frying oil. When food has to be fried a basket is first filled, then attached to the wheel and after the food has been fried the basket is detached from the wheel.

The wheel is provided with a number of lids that remain suspended from the wheel when a basket is detached. Each lid is rotatably suspended from rods that are attached to wheel. The baskets have hoops that are hung around the rods, with the lid in between the rod and the basket. Thus, the lid prevents food from drifting out of the basket when the basket is lowered into the oil.

Although this type of frying apparatus works reasonably well, there is room for improvement of the quality of the fried food. Also it is desirable to simplify cleaning of the apparatus.

### Summary of the invention

Among others it is an object of the invention to improve the quality of fried food, in particular of French fries.

Among others it is an object of the invention to simplify cleaning of the apparatus.

Among others, it is an object of the invention to provide for a food heating apparatus wherein no sudden cooling of a basket of food occurs.

Among others, it is an object of the invention to provide for a food heating apparatus wherein with a predetermined amount of available heating power a greater amount of food can be heated.

It is a further object of the invention to do so in a frying apparatus.

Among others it is an object of the invention to provide for heating baskets of food in an apparatus that works in a continuous process.

Among others it is an object of the invention to provide for heating of food in a way that allows stray food to be removed from the surface.

Among others it is a further object of the invention to do so in a way that costs little energy.

The invention provides for a food heating apparatus according to Claim 1. By connecting baskets with food at a fixed orientation to a wheel, so that the baskets turn over relative to the axis of gravity when the wheel rotates, it is ensured that the food slowly turns over when immersed in the heating fluid. Thus, the food will be evenly heated and a minimum of damage is done by turning over.

In an embodiment, the wheel assembly contains a lid surface that extends along at least part of a cylindrical surface around the axis of the wheel assembly. The lid surface closes off open loading sides of the baskets when the baskets are connected to the wheel, to prevent the food from falling out of the baskets when they are turned over. Preferably, the lid surface comprises a mesh that detains the food but passes the heating fluid, such as oil. Similarly, the baskets also preferably also contain a mesh that permits the heating fluid to pass.

Preferably the baskets having side walls diverging from one another towards the open top side, so that successive baskets with their to surfaces against the lid surface substantially fill a sector of the wheel assembly. In this way a high food processing capacity is realized.

Preferably, the lid surface comprises a plurality of individually detachable segments, each extending along a respective angle around the axis. Thus, the lid segments, which have to be cleaned because they come in contact with the food, can easily be removed for cleaning. There is no need to remove the entire wheel assembly for cleaning the segments. The removable segments need not each cover a single basket. For example, each segment may serve to cover three baskets, or even just part of a basket. The lid segments may be hung on spokes of the wheel assembly. Thus a light construction is possible that facilitates removal of the wheel assembly.

The food heating apparatus is capable of processing food at a high throughput rate. Baskets with food can be inserted one after the other and removed again once they emerge on the wheel. Because the baskets are lowered slowly into the fluid, no sudden cooling occurs, which means that a nearly constant heating power suffices. No high peak heating capacity is needed. This means that standard power outlets can be used to process vast quantities of food. In many cases the throughput is so high that more than one operator is needed, for example one for inserting and removing food and another for dispensing food to eaters. In this case, the apparatus is preferably provided with a slide next to the wheel, for emptying the baskets in the slide, which leads to a counter for dispensing food. Thus, it is prevented that hot baskets have to be moved to the counter, with the risk of injury.

These and other objects and advantageous aspects of the heating apparatus and heating method according to the invention will become apparent from the attached drawing.
- Figure 1: shows a frying apparatus
- Figure 2: shows a front view of the apparatus
- Figure 3: shows an overview of the frying apparatus
- Figure 4: shows a basket
- Figure 5: shows a cage segment
- Figure 6: shows baskets inserted into the cage segment
- Figure 7: shows a side view of a basket in a cage segment
- Figure 8 and 9: show a spoke construction
- Figure 10: shows an axle assembly
- Figure 11: shows a wheel/lid assembly
- Figure 12: shows part of an overflow system
- Figure 13: shows a side view of an overflow
- Figure 14: shows a circulation system

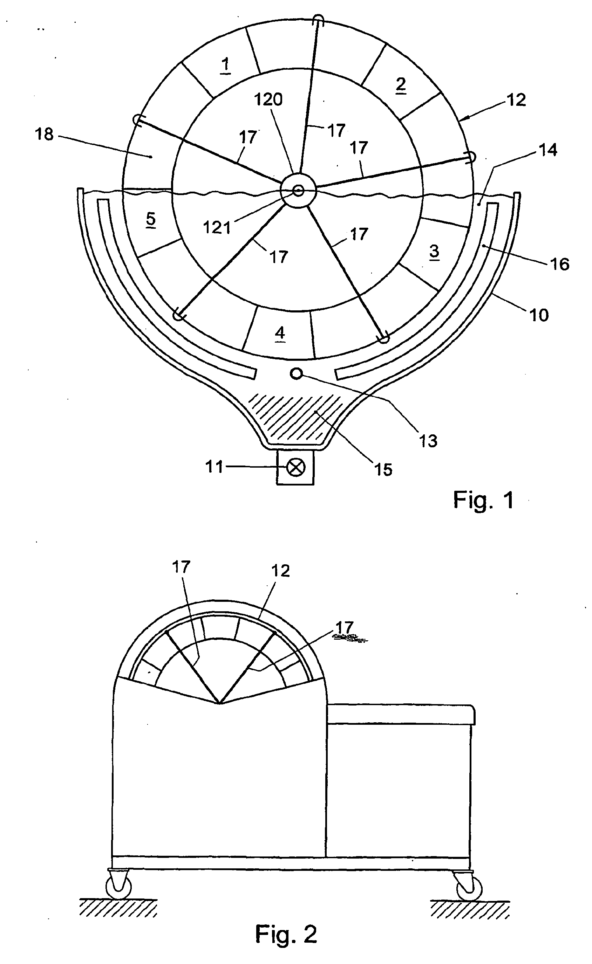

Figure 1 shows a frying apparatus. The apparatus contains an oil tank10. A wheel assembly has spokes 17 extending from a hub 120 on the axle 121 of the wheel at the ends of spokes 17 a segmented lid 12 is provided, which comprises lid segments that extend between the spokes 17 along the perimeter of the wheel assembly (individual segments are indicated with circled numbers 1-5). Space for baskets 18 is provided adjacent to the lid segments 12, in a direction toward the axle 121. Electric heating elements 16 are provided in the tank 10, positioned under the wheel assembly. A sensor 13 is provided for sensing oil temperature. In the lower part of the tank 10, lower than the electric heating elements 16, a cold zone 15 is formed, which extends to an exhaust with a tap 11 at the lowest part of the tank 10.

Figure 2A shows a side view of the frying apparatus. The wheel assembly is visible extending above the walls of the tank.

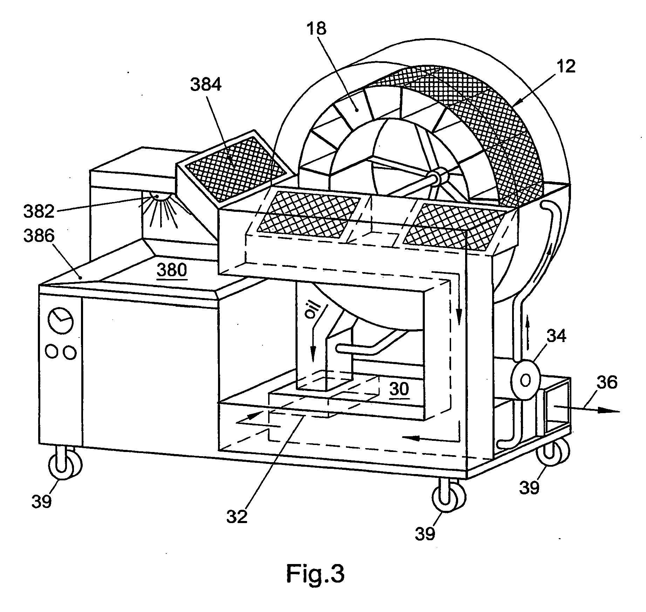

Figure 3 shows a more detailed overview of a mobile frying apparatus for frying French fries, again showing the wheel assembly, with baskets 18 inserted in the wheel. Moreover the apparatus contains a circulation system for air and oil, with an oil reservoir 30, an oil filter 32, an oil pump 34 and an air circulation path with an outlet 36 at the bottom of the apparatus. Furthermore the apparatus contains a counter with a storage surface 380, heating lamps 382 for heating food on surface 380, a slide 384 for sliding fried French fries onto the surface 380 and an inclined scoop plane 386 for scooping up French fries. The apparatus is provided with transport wheels 39 for mobile use.

In operation the tank 10 is filled with cooking oil 14 up to approximately half the height of the wheel assembly. The oil 14 is heated with the electric heating elements 16, so that a sensed temperature of the oil 14 reaches a set value, for example a regulated temperature in the range of 150-220 degrees Celsius. A motor (not shown) coupled to the axle 121 of the wheel assembly drives the wheel assembly to rotate with a substantially constant slow speed of rotation (small interruptions of movement may be provided to load baskets, but this is not necessary when the speed is very slow). Instead of a motor, one may of course rotate the wheel by hand, for example using a handle, but of course a motor is more convenient and can more easily ensure constant speed.

Initially no baskets 18 are attached to the wheel assembly. An operator fills a basket 18 with food, for example with French fries, and inserts the basket 18 into a segment of the wheel assembly at a position where the basket 18 is not yet immersed in the oil 14. The operator may repeat this process for successive baskets, each time filling a basket and inserting it into a segment of the wheel assembly, at a next position for a basket 18 on the wheel, when this position becomes available as a result of slow revolution the wheel assembly. Thus, the wheel can be filled with baskets 18 over a substantially continuous arc.

As a result of rotation of the wheel assembly the baskets 18 are immersed one after the other into the oil 14. After passing about half a revolution of the wheel assembly the baskets 18 emerge again one after the other. The rotation speed of the wheel assembly is set so that the time interval during which the baskets 18 remain in the oil from the moment of immersion to the moment of emergence ensures that the food is properly done after emergence.

When a basket 18 has emerged the operator pulls the basket 18 from the wheel assembly and drops the food from the basket into slide 384 from where it drops onto surface 380. From the surface the French fries can be scooped up and distributed. Use of slide 384 makes it unnecessary to move the hot basket close to surface 380, avoiding danger for another operator that is scooping up fried French fries from the surface 380.

Because the baskets 18 are immersed gradually, with the constant rotating speed of the wheel assembly, and the baskets 18 are substantially contiguous, a minimum variation of the oil level occurs as a result of immersion of the baskets 18. Because the baskets enter the fluid very slowly, the fluid does not cool suddenly. Therefore no excessively peaked heating power is required to maintain fluid temperature.

Because the baskets 18 have a fixed orientation relative to the wheel the food, for example French fries, is turned over gradually during frying. From immersion to emergence the food is turned 180 degrees. Turning over ensures even frying of the food. Gradual turnover ensures that turnover causes a minimum of damage to the food, so that a minimum of damage is done to the food. On one hand this results in evenly fried, high quality French fries and on the other hand this ensures a minimum pollution of the oil by debris from the French fries.

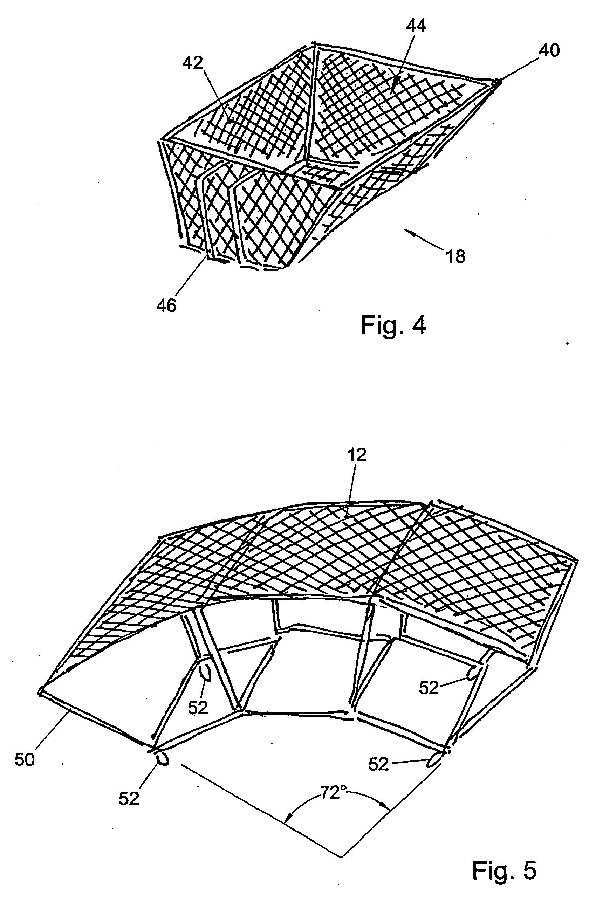

Figure 4 shows the construction of a basket 18. The basket contains a wire frame 40 which is covered by a mesh 42 that leaves the basket open on one side 44. The basket 18 has handgrips 46 on one side. When using the handgrips 46 a user should wear heat-protecting gloves. Instead of using handgrips 46, of course a detachable handgrip may be used, which can be detached from the basket 18 while the basket is connected to the wheel assembly.

Figure 5 shows the construction of a lid segment. The lid segment 12 contains a mesh on the side of the periphery of the wheel assembly and a supporting wire frame 50 that divides the lid segment into identically shaped sub-segments. The wire frame 50 has eyelets 52 on either side of the segment. Each basket 18 fits into a sub-segment, between wires of the wire frame 50.

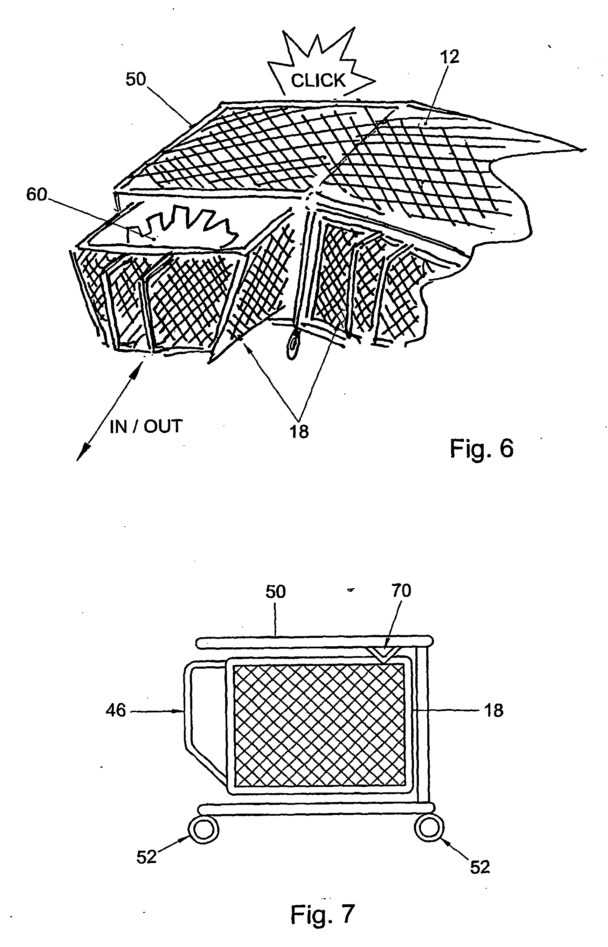

Figure 6 shows a part of a segment, with a first basket 18 inserted in to a segment and a second basket 18 with food 60 next to it in the process of being inserted or removed. A click detent is provided to retain the basket 18 in the sub-segment.

Figure 7 shows a side view of a basket 18 in the subsegment, with a protrusion 70 on the lid extending into the basket 18 to retain the basket 18 in the segment as long as no axial force is exerted. Preferably the separations between the sub-segments extend along part of radii of the wheel assembly and the baskets widen correspondingly towards their open side, so that the baskets can fill the entire periphery of the wheel assembly.

As will be appreciated the wire frame 50 of the segments 12 serves to retain the baskets 18 fixed to the wheel assembly at a fixed orientation. The click connection, using the protrusion serves as a further detent, to prevent axial movement of the baskets 18. However, it should be realized that other ways of connecting the baskets may be used. For example, clamps may provided on the wheel assembly to clamp the rear side of the basket 18 (the side opposite the handgrips 46) to the wheel assembly. As another example, the baskets 18 may be provided with small flanges extending on opposite side of one of the faces of the basket and the wheel assembly may be provided with slots for receiving these flanges. For example, flanges may be provided left and right of opening 44 (as viewed from the face with handgrips 46) and segments 12 may be provided with pairs of strips that run axially (parallel to axle 121) just below the mesh of the segments, to that the flanges on either side of a basket can hang on the strips to support and connect the basket. It will be appreciated that many other ways of connecting baskets to the wheel assembly are possible.

Preferably, a detector (not shown) is provided to detect excessive resistance against rotation of the wheel assembly, for example due to a basket 18 that has not been fully inserted. When the detector detects excessive resistance it commands the motor that rotates the wheel to stop or even reverse.

The wheel is assembled from an axle 121 with a hub 120 mounted on it, by inserting spokes 17 into the hub 120, and connecting the lid segments 12 to the radially extending parts of the spokes 17.

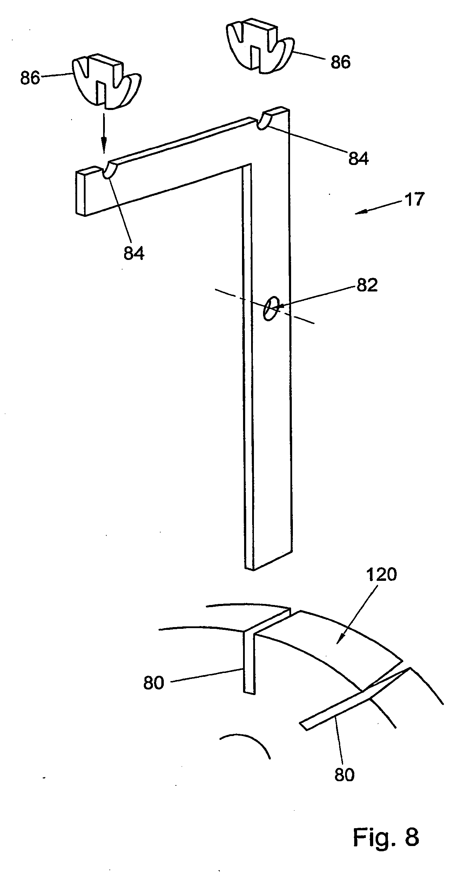

Figure 8 shows a spoke 17. The hub of the wheel assembly has slots 80 on its perimeter into which the spokes 17 fit. The spoke 17 are L shaped, with the top of the stem of the L inserted into the slot 80 and fixed therein, for example by welding. The spoke 17 has a hole 82 in the stem of the L for connecting eyelets 52 and in the horizontal part of the L notches 84 are provided for inserting wings 86.

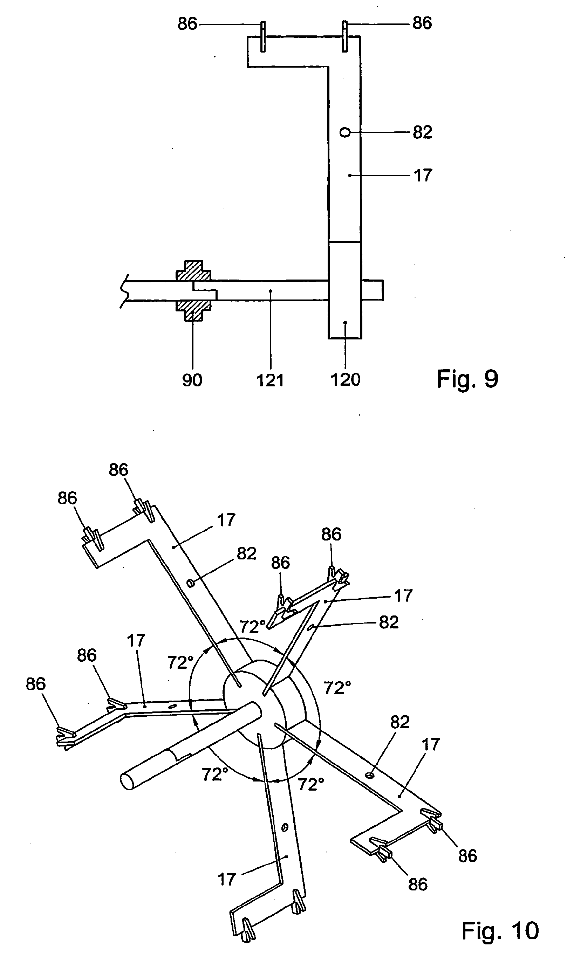

Figure 9 shows a spoke 17 mounted on the axle 121 of the wheel assembly. The hub 120 is mounted on the axle 121 and the spoke 17 is mounted in the hub 120. Preferably, the axle 121 is made of two parts, with a detachable sleeve 90 connecting the parts. This makes it easy to remove the axle 121 from the apparatus.

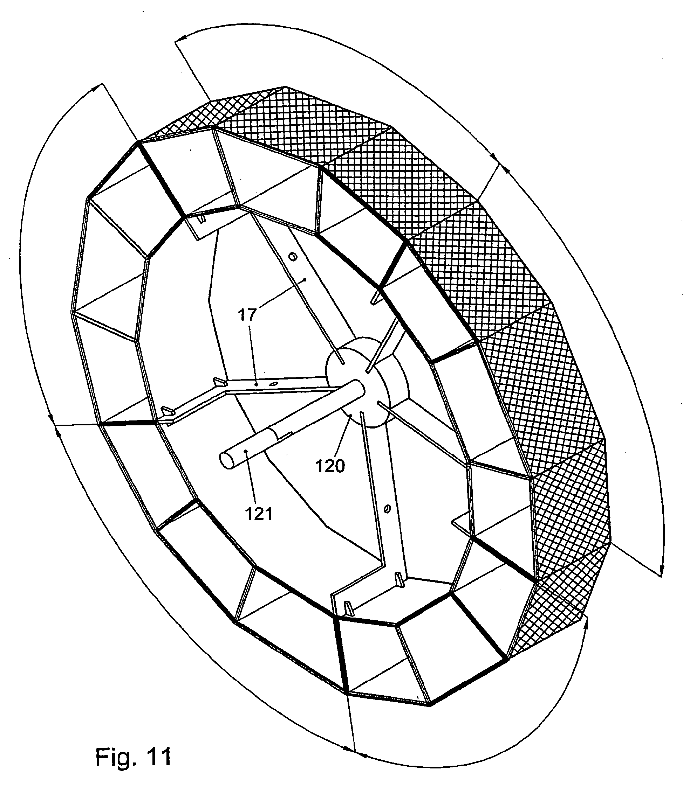

Figure 10 shows the axle 121 and hub 120 carrying five spokes 17. Figure 11 shows the wheel assembly with each lid segments 12 hanging between a respective pair of spokes 17. The segments 12 are suspended on the wings 86 that are inserted in the notches 84 on the short arm of the L. Eyelets 52 on the wire frame 50 of the segments 12 are used to connect the segments 12 to the long branch of the L through the holes 82 with a nut and bolt. Further eyelets 52 are used to connect the wire frames of successive segments 12 on the side opposite the long branch of the L shaped spokes 17.

The lid segments 12, with the mesh that comes into contact with food are regularly disassembled from the wheel assembly for cleaning, e.g. in a washing machine. Because the wheel can easily be disassembled cleaning does not require much overhead. After cleaning the wheel assembly is readily reassembled, by hanging wings 86 in notches 84 of a pair of spokes 17 that extend upward from hub 120, hanging lid segment 12 on wings 86. Eyelets 52 on one side of the lid segment 12 may be provisionally attached to the hole 82 of the spoke on one side of the lid segment 12. Next the wheel may be rotated so that the spoke 17 on the other side and the next spoke 17 after that extend upward. Wings 86 are hung on the next spoke 17 and a next lid segment 12 is hung on the wings 86. The eyelets 52 of this lid segment 12 are attached to the eyelets of the previous lid segment 12, one pair of eyelets 52 via the hole 82 in spoke 17. Subsequently this procedure is repeated until lid segments 12 have been hung full circle, the last lid segment 12 being attached to the first lid segments.

Thus this construction allows the lid segments 12 and the spokes 17 to be easily removed and reassembled for cleaning. On the other hand a maximum food processing capacity is realized, because successive the baskets 18 can substantially fill any part of the perimeter of the wheel assembly, since the lid segments extend over the entire perimeter.

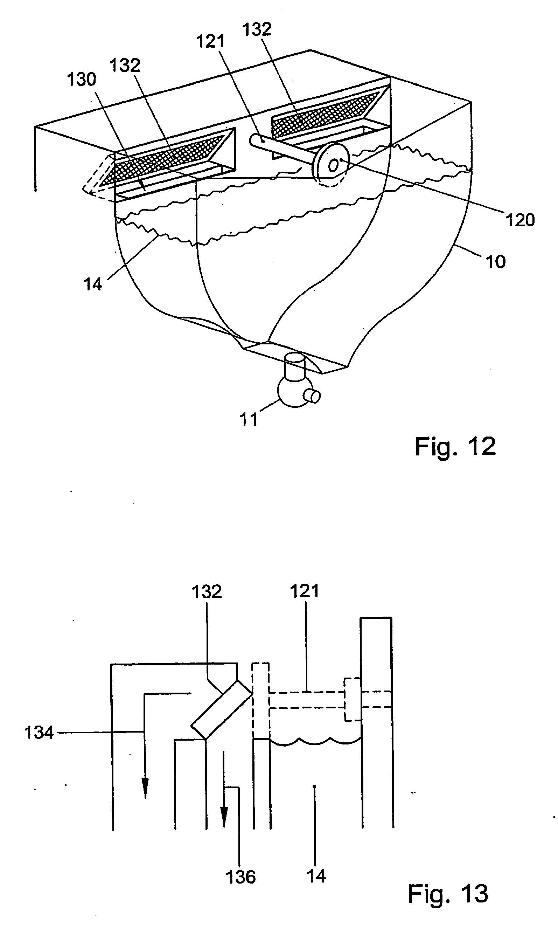

Figure 12 shows an overflow construction. For an overview of the overflow system, one may refer to figure 3 as well. The tank 10 is shown with oil 14 in it. Next to the tank 10, oil overflow outlets 130 are provided that catch oil 14 that overflows from the tank 10 (e.g. due to a rise in the oil level upon immersion of food in the oil). Over the overflows 130 fat filters 132 are provided, in front of a gas suction channel.

Figure 13 shows a detail of the overflow. The fat filter 132 is arranged to filter oil droplets from gas sucked into the gas suction channel 134. The fat filter 132 is mounted at a skewed angle over the overflow 130, so that oil that drips from the fat filter drips into the overflow and joins the overflowing oil current 136.

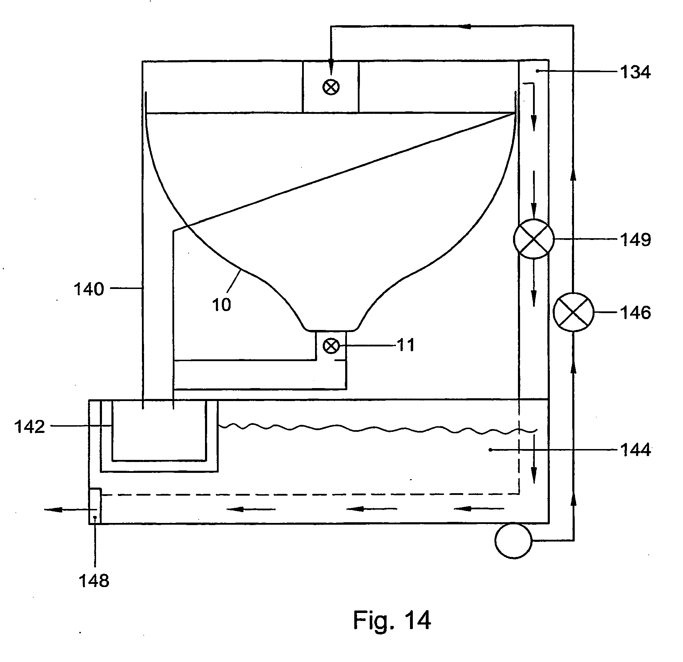

Figure 14 shows a circulation system. Overflowing oil is fed to a pipe 140, which leads to an oil filter 142. Preferably, the tap 11 at the bottom of the tank is also coupled to this pipe 140. The oil filter 142 outputs into an oil reservoir 144 at the bottom of the apparatus. A circulation pump 146 is coupled to the oil reservoir 144 for pumping oil from the reservoir 144 to the top of the tank 10. The gas suction channel 134 feeds the hot gas that has been pumped from the top of the tank 10 down to flow around the reservoir 144 and out through a cleaning filter 148.

In operation, dependent on the amount of food in the baskets 18, the temperature of the food 60 and/or the presence of baskets 18 at all the oil 14 level in the tank 10 can rise with different speeds. The overflow 130 catches excessive rises and the overflowed fluid is recirculated later, when it is detected that the fluid level has fallen again. A fluid level detector (not shown) is preferably provided in the tank to activate the recirculation pump 146 for this purpose. The oil filter 142 filters stray food from overflowing fluid.

The reservoir 144 receives oil from the filter 142. The reservoir 144 may be used to add replacement fluid to the recirculating fluid. For this purpose an oil supply inlet (not shown) to reservoir 144 may be provided. Frying oil is typically absorbed partly in the food, making it desirable to add replacement oil regularly, so as to make it possible to maintain the oil at a predetermined average level in tank 10. Replacement of the oil is thus realized together with circulation.

A gas pump 149 pumps gas from a region immediately over a top of the oil in the tank 10. The gas is used to heat oil in the reservoir 144. By pumping away gas (the gas contains air including oil and/or water vapor) from above the fluid smells and pollution are avoided. In addition the gas is used to keep up the temperature of overflowed fluid. Thus energy consumption is reduced. Preferably, an additional heater (not shown) is provided in the recirculation unit to heat the recirculated oil to at or near the temperature of oil in the tank 10 before supplying it to the tank 10.

The fat filter 132 between said region and the gas is provided for filtering oil from the gas before it enters the gas suction channel 134, the fat filter 132 being inclined at an angle to the vertical so that oil drips from a lower filter surface of the fat filter 132 into the overflow 130. Thus oil losses are minimized.

Preferably the reservoir 144 is included in an enclosed space under the tank 10, for storing recirculating oil. The gas pump 149 is preferably arranged to pump gas from a region immediately over a top of the oil 14, the pumped gas being fed to the closed space for heating oil in the reservoir 144 with the pumped gas. This is an effective way of conserving energy.

Preferably the tap 11 at the lower part of the tank is coupled to the reservoir 144 via the oil filter 142. Thus stray food that settles a the bottom of the tank 10 may be passed from the tank 10 and filtered from the oil before entering the reservoir 144. Later the oil can be reused. Only one circulation system is needed for recirculating oil from the top and the bottom of the tank 10.

Preferably the apparatus comprises an emergency valve (not shown) in the drain connection of the tank 10 for draining the oil 14 into the reservoir 144 at an increased speed in case of an emergency. Thus the tank 10 can be emptied quickly into the reservoir 144 in case of fire for example. Alternatively, valve 11 may be of a type that has a normal operating position, in which oil is drained at a low rate from the tank 10 sufficient to remove debris, and an emergency position, in which oil is drained at a higher rate to drain the oil from the tank 10 into the reservoir 144 as quickly as possible. Preferably, the apparatus contains a fire extinguisher (not shown) fixed so that it is aimed a region above the surface of the oil, with a control to actuate it in case of emergency.

Although the invention has been described for frying French fries in oil, it will be appreciated that other food, or other heating fluid, such as water may be used.

## Claims

1. A food heating apparatus comprising
- a tank (10) for a heating fluid;
- a heating element (16) for heating the fluid in the tank;
- a wheel assembly (17, 19) suspended rotatably around an axis, so that revolution around the axis moves peripheral parts of wheel assembly into and out of the fluid when the tank has been filled with the fluid;
- connection elements (50, 52) for connecting a plurality of baskets to the wheel assembly, **characterized by** the connection elements keeping each basket oriented at a respective substantially fixed angle relative to the rotating wheel assembly, whereby the baskets turn over relative to the axis of gravity when the wheel makes a revolution around its axis.

2. A food heating apparatus according to Claim 1, wherein the baskets are open on a side for loading food, the wheel assembly comprising a lid surface (12) non-rotatably fixed relative to the wheel assembly and extending along at least part of a cylindrical surface around the axis of the wheel assembly, so that the open sides of the baskets, when the baskets are connected to the wheel assembly, are closed off by the lid surface against passing food.

3. A food heating apparatus according to Claim 1, wherein the lid surface comprises a fluid permeable mesh.

4. A food heating apparatus according to Claim 2, wherein the lid surface comprises a plurality of individually detachable segments, each extending along a respective angle around the axis.

5. A food heating apparatus according to Claim 4, wherein the wheel assembly comprises a hub (120) and spokes (17) extending from the hub, each segment being detachably attached to the wheel assembly between a respective pair of successive spokes.

6. A food heating apparatus according to Claim 2, wherein said side of the baskets is a top side, the baskets having side walls diverging from one another towards the top side, so that facing side-walls of successive baskets, when the successive baskets are connected to successive positions along the wheel, substantially fit against each other.

7. A food heating apparatus according to Claim 1, comprising a counter, the counter having a gathering surface for gathering fried food, the apparatus comprising a slide for sliding food from a location adjacent to the wheel assembly to the gathering surface.

8. A food heating apparatus according to Claim 1, comprising
- an overflow outlet located in or on top of a wall of the tank;
- a recirculation circuit for recirculating fluid from the overflow to the tank.

9. A food heating apparatus according to Claim 8, wherein the recirculation circuit comprises a filter for filtering stray food from overflowing fluid.

10. A food heating apparatus according to Claim 8, comprising a fluid supply reservoir, coupled to the recirculation circuit, with an inlet for adding replacement fluid to the fluid in the recirculation circuit.

11. A food heating apparatus according to Claim 8, comprising
- a gas pump arranged to pump gas from a region immediately above a top of the fluid in the tank,
- a heat exchanger for heating fluid in the recirculation circuit with the pumped gas.

12. A food heating apparatus according to Claim 11, comprising a fat filter between said region and a channel to the gas pump, for filtering oil from the gas, the fat filter being inclined at an angle to the axis of gravity so that oil dripping from an lower filter surface of the fat filter will drip into the overflow.

13. A food heating apparatus according to Claim 8, wherein the recirculation circuit comprises a reservoir in an enclosed space under the tank, for storing recirculating fluid.

14. A food heating apparatus according to Claim 13 comprising a gas pump arranged to pump gas from a region immediately over a top of the fluid, the gas pump pumping the pumped gas to flow through the enclosed space for heating fluid in the reservoir with the pumped gas.

15. A food heating apparatus according to Claim 13 having a drain connection between a substantially lowest part of the tank and the reservoir.

16. A food heating apparatus according to Claim 14, comprising an emergency valve in said drain connection for draining the oil into the reservoir at an increased speed in case of an emergency.

17. A method of heating food, the method comprising
- rotating a wheel assembly around its axis at a substantially constant rotation speed, a lower part of the wheel assembly passing through a heated fluid;
- inserting batches of food in respective baskets;
- connecting the baskets at respective positions on the wheel assembly in a loading region outside a heated fluid, each basket being fixed oriented at a respective fixed angle relative to the wheel assembly;
- moving the baskets with the wheel from the loading region into the fluid and again out of the fluid, whereby the baskets are turned over relative to an axis of gravity while the baskets move through the fluid, the rotation speed being such that the food is done when the basket in which the food is contained leaves the fluid;
- removing the basket with the food from the wheel after emergence from the fluid.

18. A method according to claim 17, wherein the wheel assembly comprises a lid surface extending along a circle around the axis of the wheel assembly, the method comprising
- closing off the baskets during preparation of food by connecting the baskets to the wheel assembly with an open side against the lid surface;
- detaching segments of the lid surface for cleaning after preparation of food.

## Patentansprüche

1. Nahrungsmittelerhitzungsvorrichtung, umfassend:
- einen Behälter (10) für eine Erhitzungsflüssigkeit;
- ein Heizelement (16) zum Erhitzen der Flüssigkeit in dem Behälter;
- eine Radanordnung (17,12), welche drehbar um eine Achse aufgehängt ist, sodass eine Umdrehung um die Achse umfängliche Teile der Radanordnung in die und aus der Flüssigkeit bewegt, wenn der Behälter mit der Flüssigkeit gefüllt ist;
- Verbindungselemente (50,52) zum Verbinden mehrerer Körbe mit der Radanordnung, **dadurch gekennzeichnet, dass** die Verbindungselemente jeden Korb auf einen jeweiligen im Wesentlichen festen Winkel bezogen auf die sich drehende Radanordnung ausgerichtet halten, wobei sich die Körbe bezogen auf die Schwerkraftachse umdrehen, wenn das Rad eine Umdrehung um seine Achse ausführt.

2. Nahrungsmittelerhitzungsvorrichtung nach Anspruch 1, wobei die Körbe an einer Seite zum Zuführen des Nahrungsmittels offen sind, wobei die Radanordnung eine Deckelfläche (12) umfasst, welche nicht drehbar bezogen auf die Radanordnung befestigt ist und sich entlang mindestens eines Teils einer zylindrischen Fläche um die Achse der Radanordnung erstreckt, sodass die offenen Seiten der Körbe durch die Deckelfläche gegen ein Durchlassen des Nahrungsmittels verschlossen sind, wenn die Körbe mit der Radanordnung verbunden sind.

3. Nahrungsmittelerhitzungsvorrichtung nach Anspruch 1, wobei die Deckelfläche ein flüssigkeitsdurchlässiges Siebgewebe umfasst.

4. Nahrungsmittelerhitzungsvorrichtung nach Anspruch 2, wobei die Deckelfläche mehrere einzeln lösbare Segmente umfasst, welche sich jeweils entlang eines entsprechenden Winkels um die Achse erstrecken.

5. Nahrungsmittelerhitzungsvorrichtung nach Anspruch 4, wobei die Radanordnung eine Nabe (120) und Speichen (17), welche sich von der Nabe erstrecken, umfasst, wobei jedes Segment lösbar an der Radanordnung zwischen einem entsprechenden Paar von aufeinanderfolgenden Speichen angebracht ist.

6. Nahrungsmittelerhitzungsvorrichtung nach Anspruch 2, wobei die Seite der Körbe eine Oberseite ist, wobei die Körbe Seitenwände aufweisen, welche voneinander in Richtung der Oberseite auseinanderlaufen, sodass gegenüberliegende Seitenwände von aufeinanderfolgenden Körben im Wesentlichen gegeneinander passen, wenn die aufeinanderfolgenden Körbe in aufeinanderfolgende Positionen entlang des Rades befestigt sind.

7. Nahrungsmittelerhitzungsvorrichtung nach Anspruch 1, umfassend einen Ausschank, wobei der Ausschank eine Sammelfläche zum Sammeln eines gebratenen Nahrungsmittels aufweist, wobei die Vorrichtung eine Gleitfläche zum Gleiten des Nahrungsmittels von einer Stelle benachbart zu der Radanordnung zu der Sammelfläche umfasst.

8. Nahrungsmittelerhitzungsvorrichtung nach Anspruch 1, umfassend
- einen Überlaufauslass, welcher in oder an einer Oberseite einer Wand des Behälters angeordnet ist;
- einen Rückführungskreis zum Wiederzuführen der Flüssigkeit von dem Überlauf in den Behälter.

9. Nahrungsmittelerhitzungsvorrichtung nach Anspruch 8, wobei der Rückführungskreis ein Filter zum Filtern von in die Irre geleiteten Nahrungsmitteln aus der überlaufenden Flüssigkeit umfasst.

10. Nahrungsmittelerhitzungsvorrichtung nach Anspruch 8, umfassend einen Flüssigkeitsversorgungsvorratsbehälter, welcher mit der Rückführungskreis gekoppelt ist, mit einem Einlass zum Hinzufügen einer Austauschflüssigkeit zu der Flüssigkeit in der Rückführungskreis.

11. Nahrungsmittelerhitzungsvorrichtung nach Anspruch 8, umfassend:
- eine Gaspumpe, welche ausgestaltet ist, Gas von einem Bereich unmittelbar über einer Oberfläche der Flüssigkeit in dem Tank zu pumpen,
- einen Wärmetauscher zum Erhitzen der Flüssigkeit in der Rückführungskreis mit dem gepumpten Gas.

12. Nahrungsmittelerhitzungsvorrichtung nach Anspruch 11, umfassend ein Fettfilter zwischen dem Bereich und einem Kanal zu der Gaspumpe zum Filtern von Öl aus dem Gas, wobei das Fettfilter in einem Winkel zu der Schwerkraftachse derart geneigt ist, dass das Öl, welches von einer unteren Fläche des Fettfilters tropft, in den Überlauf tropft.

13. Nahrungsmittelerhitzungsvorrichtung nach Anspruch 8, wobei die Rückführungskreis einen Vorratsbehälter in einem umschlossenen Raum unter dem Behälter zum Lagern der Rückführungsflüssigkeit umfasst.

14. Nahrungsmittelerhitzungsvorrichtung nach Anspruch 13, umfassend eine Gaspumpe, welche ausgestaltet ist, Gas von einem Bereich unmittelbar über einer Oberfläche der Flüssigkeit zu pumpen, wobei die Gaspumpe das gepumpte Gas pumpt, damit es durch den eingeschlossenen Raum zum Erhitzen der Flüssigkeit in dem Vorratstank mit dem gepumpten Gas strömt.

15. Nahrungsmittelerhitzungsvorrichtung nach Anspruch 13, welche eine Ablaufverbindung zwischen einem im Wesentlichen untersten Teil des Behälters und dem Vorratsbehälter aufweist.

16. Nahrungsmittelerhitzungsvorrichtung nach Anspruch 14, umfassend ein Notventil in der Ablaufverbindung zum Ablassen des Öls in den Vorratsbehälter mit einer erhöhten Geschwindigkeit in einem Notfall.

17. Verfahren zum Erhitzen eines Nahrungsmittels, wobei das Verfahren umfasst:
- Drehen einer Radanordnung um ihre Achse mit einer im Wesentlichen konstanten Drehgeschwindigkeit, wobei ein unterer Teil der Radanordnung durch eine erhitzte Flüssigkeit verläuft;
- Einführen von Nahrungsmittelladungen in entsprechende Körbe;
- Befestigen der Körbe an entsprechenden Positionen der Radanordnung in einem Beladungsbereich außerhalb einer erhitzten Flüssigkeit, wobei jeder Korb in einem entsprechenden festen Winkel bezogen auf die Radanordnung ausgerichtet befestigt wird;
- Bewegen der Körbe mit dem Rad von dem Beladungsbereich in die Flüssigkeit und wieder aus der Flüssigkeit heraus, wobei die Körbe bezogen auf eine Schwerkraftachse umgedreht werden, während die Körbe sich durch die Flüssigkeit bewegen, wobei die Drehgeschwindigkeit derart ist, dass das Nahrungsmittel fertig ist, wenn der Korb, in welchem das Nahrungsmittel enthalten ist, die Flüssigkeit verlässt;
- Entfernen des Korbes mit dem Nahrungsmittel von dem Rad nach einem Austritt aus der Flüssigkeit.

18. Verfahren nach Anspruch 17, wobei die Radanordnung eine Deckelfläche umfasst, welche sich entlang eines Kreises um die Achse der Radanordnung erstreckt, wobei das Verfahren umfasst:
- Verschließen der Körbe während einer Zubereitung des Nahrungsmittels durch Koppeln der Körbe mit der Radanordnung mit einer offenen Seite gegenüber der Deckelfläche;
- Lösen von Segmenten der Deckelfläche zum Reinigen nach einer Zubereitung des Nahrungsmittels.

## Revendications

1. Appareil à chauffer les aliments comprenant
- une cuve (10) recevant un fluide de chauffe ;
- un élément de chauffage (16) pour chauffer le fluide présent dans la cuve ;
- un assemblage en forme de roue (17, 19) suspendu avec capacité de rotation autour d'un axe de telle façon que la rotation autour de l'axe ait pour effet d'entraîner les éléments périphériques de l'assemblage en forme de roue dans et hors du fluide lorsque la cuve a été remplie de fluide ;
- des éléments de raccordement (50, 52) pour raccorder une pluralité de paniers à l'assemblage en forme de roue,
**caractérisé en ce que** lesdits éléments de raccordement maintiennent chaque panier orienté selon un angle sensiblement fixe par rapport à l'assemblage en forme de roue en rotation, les paniers se retournant par rapport à l'axe de gravité à mesure que la roue fait un tour autour de son axe.

2. Appareil à chauffer les aliments selon la revendication 1, **caractérisé en ce que** les paniers sont ouverts d'un côté pour charger la nourriture, l'assemblage en forme de roue comprenant une surface formant couvercle (12) fixe en rotation par rapport à l'assemblage en forme de roue et s'étendant le long d'au moins une partie d'une surface cylindrique autour de l'axe de l'assemblage en forme de roue, de façon que lorsque les paniers sont raccordés à l'assemblage en forme de roue, les côtés ouverts des paniers soient fermés par la surface formant couvercle afin d'empêcher la nourriture de sortir.

3. Appareil à chauffer les aliments selon la revendication 1, **caractérisé en ce que** la surface formant couvercle comprend un grillage perméable au fluide.

4. Appareil à chauffer les aliments selon la revendication 2, **caractérisé en ce que** la surface formant couvercle comprend une pluralité de segments détachables individuellement, chaque segment s'étendant selon un angle particulier autour de l'axe.

5. Appareil à chauffer les aliments selon la revendication 4, **caractérisé en ce que** l'assemblage en forme de roue comprend un moyeu (120) et des rayons (17) qui s'étendent à partir du moyeu, chaque segment étant monté de manière amovible sur l'assemblage en forme de roue entre une paire de rayons successifs.

6. Appareil à chauffer les aliments selon la revendication 2, **caractérisé en ce que** ledit côté des paniers est le côté supérieur, les paniers ayant des parois latérales qui divergent l'une de l'autre en direction du côté supérieur de telle sorte que les parois latérales en regard de paniers successifs sont sensiblement accolées lorsque les paniers successifs sont raccordés à des emplacements successifs sur la roue.

7. Appareil à chauffer les aliments selon la revendication 1, comprenant un comptoir, ledit comptoir présentant une surface de collecte pour collecter les aliments frits, l'appareil comprenant une goulotte par laquelle on fait glisser les aliments d'un emplacement adjacent à l'assemblage en forme de roue vers la surface de collecte.

8. Appareil à chauffer les aliments selon la revendication 1, comprenant
- un déversoir situé dans ou sur une paroi de la cuve ;
- un circuit de recirculation permettant de réintégrer dans la cuve le fluide provenant du déversoir.

9. Appareil à chauffer les aliments selon la revendication 8, **caractérisé en ce que** le circuit de recirculation comprend un filtre permettant de filtrer les morceaux d'aliments contenus dans le fluide s'échappant par le déversoir.

10. Appareil à chauffer les aliments selon la revendication 8, comprenant un réservoir d'alimentation en fluide, couplé au circuit de recirculation, avec une entrée permettant d'ajouter du fluide de remplacement au fluide présent dans le circuit de recirculation.

11. Appareil à chauffer les aliments selon la revendication 8, comprenant
- une pompe à gaz destinée à pomper le gaz présent dans une zone située directement au-dessus du fluide présent dans la cuve,
- un échangeur de chaleur destiné à chauffer le fluide présent dans le circuit de recirculation au moyen du gaz pompé.

12. Appareil à chauffer les aliments selon la revendication 11, comprenant un filtre à graisse entre ladite zone et un conduit menant à la pompe à gaz, pour séparer l'huile du gaz par filtrage, le filtre à graisse étant incliné selon un angle par rapport à l'axe de gravité de façon que l'huile s'écoulant d'une surface de filtrage inférieure du filtre à graisse tombe dans le déversoir.

13. Appareil à chauffer les aliments selon la revendication 8, **caractérisé en ce que** le circuit de recirculation comprend un réservoir situé dans un espace fermé sous la cuve, pour stocker le fluide de recirculation.

14. Appareil à chauffer les aliments selon la revendication 13, comprenant une pompe à gaz agencée pour pomper le gaz présent dans une région située directement au-dessus du fluide, la pompe à gaz refoulant le gaz pompé vers l'espace fermé afin de chauffer le fluide présent dans le réservoir au moyen du gaz pompé.

15. Appareil à chauffer les aliments selon la revendication 13, comprenant un raccord de drainage entre la partie de la cuve située sensiblement le plus bas et le réservoir.

16. Appareil à chauffer les aliments selon la revendication 14, comprenant une soupape de sécurité dans ledit raccord de drainage pour évacuer l'huile plus rapidement vers le réservoir en cas d'urgence.

17. Procédé de chauffage d'aliments, comprenant
- l'entraînement en rotation d'un assemblage en forme de roue autour de son axe à une vitesse de rotation sensiblement constante, une partie inférieure de l'assemblage en forme de roue traversant un fluide chauffé ;
- l'insertion de doses d'aliments dans les différents paniers ;
- le raccordement des paniers à leurs emplacements respectifs sur l'assemblage en forme de roue dans une zone de chargement située en dehors du fluide chauffé, chaque panier étant monté selon un angle fixe par rapport à l'assemblage en forme de roue ;
- le déplacement des paniers au moyen de la roue depuis une zone de chargement jusque dans le fluide puis hors du fluide, les paniers se retournant par rapport à un axe de gravité à mesure que les paniers traversent le fluide, la vitesse de rotation étant telle que les aliments sont prêts lorsque le panier qui les contient quitte le fluide ;
- le retrait des paniers contenant les aliments hors de la roue après que lesdits paniers sont ressortis du fluide.

18. Procédé selon la revendication 17, **caractérisé en ce que** l'assemblage en forme de roue comprend une surface formant couvercle qui s'étend selon un cercle autour de l'axe de l'assemblage en forme dé roue, ledit procédé comprenant
- la fermeture des paniers, lors de la préparation des aliments, par le raccordement des paniers à l'assemblage en forme de roue, avec un côté ouvert contre la surface formant couvercle ;
- le détachement des segments de la surface formant couvercle à des fins de nettoyage après la préparation des aliments.
